# EUROPEAN PATENT APPLICATION

(11) **EP 4 567 070 A1**
(43) Date of publication of application: **11.06.2025**
(21) Application number: 23875201.8
(22) Date of filing: 04.10.2023
(51) Int. Cl.: C08L 67/02, C08L 67/04, C08L 33/06

(54) **RESIN COMPOSITION AND BIODEGRADABLE RESIN MOLDED PRODUCT COMPRISING SAME**

(30) Priority: 04.10.2022 KR 20220126502
(71) Applicant: LG CHEM, LTD., Seoul 07336 (KR)
(72) Inventor: MOON, Junsoo, Daejeon 34122 (KR); PARK, Sung Eun, Daejeon 34122 (KR); YOO, Kihyun, Daejeon 34122 (KR); HAN, Sanghoon, Daejeon 34122 (KR)
(74) Representative: Goddar, Heinz J.
(86) International application number: PCT/KR2023/015230
(87) International publication number: WO 2024/076137

(57) **Abstract**

The present invention relates to a resin composition and a biodegradable resin molded product comprising the same. The resin composition of the present invention can exhibit excellent mechanical properties while maintaining the inherent biodegradability of polybutylene adipate terephthalate or polylactic acid.

## Description

### [TECHNICAL FIELD]

### Cross-Reference to related application(s)

This application claims the benefit of priority based on Korean Patent Application No. 10-2022-0126502 dated October 04, 2022, and the All material disclosed in the literature is incorporated as part of this specification.

The present invention relates to a resin composition and a biodegradable resin molded product comprising the same.

### [BACKGROUND ART]

Thermoplastic polymer resins have excellent mechanical and chemical properties and are used in various fields such as a drinking water container, a medical application, a food packaging paper, a food container, an automobile molded product, and an agricultural vinyl.

Since thermoplastic polymer resins, especially polyethylene films, have excellent mechanical properties, are harmless to the human body, and can be continuously deformed by applying heat, they are often used as hot seal bags for food packaging, agricultural mulch films, and the like.

Hot seal bags for food packaging are often used for vacuum packaging foods and the like, and polyethylene films and the like, which can achieve excellent bonding strength even at low sealing temperatures, are often used.

The above agricultural film is often used in mulching farming. A mulch refers to a material that is used to cover the soil surface when cultivating crops. Covering the upper surface of the soil with various types of materials can inhibit the growth of weeds and prevent pests and diseases, thereby reducing the use of pesticides. In addition, the temperature of the soil can be easily adjusted, and beneficial bacteria in the soil can also be grown, thereby preventing soil erosion and maintaining soil moisture.

Such mulch materials include, for example, leaves of crops such as rice straw and grass, or polyolefin-based films, and generally, synthetic resins such as polyethylene films are often used.

However, as described above, polyethylene films, which are often used as a hot seal bags for food packaging or mulch materials, do not decompose in the natural environment and has limitations in their recycling. Particularly in recent years, it is known that discarded plastics, such as polyethylene films, flow into the sea, and are shredded into very small microplastics by reflux and sunlight in the sea.

Currently, it is known that countless amounts of such microplastics, ranging from billions to tens of billions, are floating in the sea, which enters the bodies of sea creatures, accumulate within the ecosystem, and affect the entire food chain.

Therefore, there is a need for research into environmentally friendly resins that can replace existing thermoplastic plastics.

### [DETAILED DESCRIPTION OF THE INVENTION]

### [Technical Problem]

It is an object of the present invention to provide a resin composition that can achieve excellent mechanical properties while being biodegradable.

It is another object of the present invention to provide a biodegradable resin molded product comprising the above resin composition.

### [Technical Solution]

According to one aspect of the invention, there is provided a resin composition comprising: a polybutylene adipate terephthalate; a polylactic acid; and an acrylate-based copolymer, wherein the acrylate-based copolymer includes i) a first repeating unit derived from an alkyl (meth)acrylate-based monomer, ii) a second repeating unit derived from an epoxy (meth)acrylate-based monomer, and iii) a third repeating unit derived from an alkylene glycol (meth)acrylate-based monomer.

According to an embodiment of the invention, the resin composition may comprise 1 to 50 parts by weight of polylactic acid based on 100 parts by weight of polybutylene adipate terephthalate.

According to an embodiment of the invention, the resin composition may comprise 0.1 to 10 parts by weight of an acrylate-based copolymer based on 100 parts by weight of polybutylene adipate terephthalate.

According to an embodiment of the invention, the alkyl (meth)acrylate-based monomer may comprise at least one selected from the group consisting of methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, octyl (meth)acrylate, isooctyl (meth)acrylate, 2-ethylhexyl (meth)acrylate, decyl (meth)acrylate, isodecyl (meth)acrylate, isobornyl (meth)acrylate, and lauryl (meth)acrylate.

According to an embodiment of the invention, the epoxy (meth)acrylate-based monomer may be a compound represented by the following Chemical Formula 1: 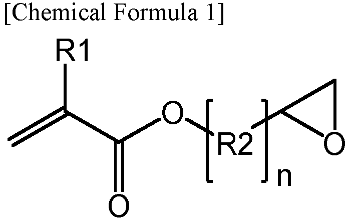 wherein, in Chemical Formula 1, R1 is hydrogen or methyl, R2 is a single bond, methylene, or an oxyalkylene having 1 to 3 carbon atoms, and n is 1 to 10.

According to an embodiment of the invention, the alkylene glycol (meth)acrylate-based monomer may be a compound represented by the following Chemical Formula 2: 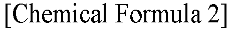 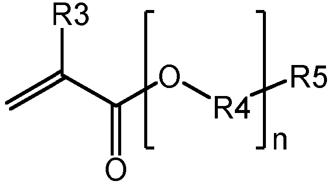 wherein, in Chemical Formula 2, R3 is hydrogen or methyl, R4 is an alkylene having 1 to 3 carbon atoms, R5 is hydrogen, an alkyl having 1 to 3 carbon atoms, or an oxyalkyl having 1 to 3 carbon atoms, and n is 1 to 10.

According to an embodiment of the invention, the acrylate-based copolymer may have an epoxy equivalent of about 400 to about 600 g/eq.

According to an embodiment of the invention, the acrylate-based copolymer may have a weight average molecular weight of about 10,000 to about 50,000.

According to an embodiment of the invention, the acrylate-based copolymer may have a glass transition temperature value of about 60 to about 90°C.

According to an embodiment of the invention, the resin composition may have a weight average molecular weight of 100,000 to 200,000.

According to an embodiment of the invention, the value of melt volume flow ratio (190°C, 5kg) measured according to ASTM D1238 conditions may be about 2 to about 10 ml/10min.

According to an embodiment of the invention, the tensile strength value measured according to the ASTM D638 standard may be 250 to 390 kgf/cm².

According to an embodiment of the invention, the elongation value measured according to the ASTM D638 standard may be 400% or more.

According to an embodiment of the invention, the average domain diameter value of polylactic acid may be 1 *µ*m or less.

Meanwhile, according to another aspect of the invention, there is provided a biodegradable resin molded product comprising the above-mentioned resin composition.

The technical terms used herein is for the purpose of describing exemplary embodiments only and is not intended to limit the scope of the invention.

The singular forms "a," "an" and "the" are intended to include plural forms, unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

Further, as used herein, in case a layer or an element is mentioned to be formed "on" or "above" layers or elements, it means that the layer or element is directly formed on the layers or elements, or it means that other layers or elements may be additionally formed between the layers, on a subject, or on a substrate.

Although the present invention may have various forms and various modifications can be made thereto, specific examples will be exemplified and explained in detail. However, it is not intended to limit the present invention to disclosed forms, and it should be understood that all the modifications, equivalents or substitutions within the idea and technical scope of the present invention are included in the present invention.

Now, the present disclosure will be described in more detail.

The present inventors have found that when specific components are used together in a blended resin that is a blend of polybutylene adipate terephthalate and polylactic acid (PLA), the compatibility between polybutylene adipate terephthalate and polylactic acid is improved, thereby being able to obtain a resin composition that can maintain its inherent biodegradability while realizing excellent mechanical properties such as elongation and tensile strength, and completed the present invention.

A resin composition according to one aspect of the present invention comprises a polybutylene adipate terephthalate; a polylactic acid; and an acrylate-based copolymer, wherein the acrylate-based copolymer includes i) a first repeating unit derived from an alkyl (meth)acrylate-based monomer, ii) a second repeating unit derived from an epoxy (meth)acrylate-based monomer, and iii) a third repeating unit derived from an alkylene glycol (meth)acrylate-based monomer.

The resin composition may contain polylactic acid in an amount of about 1 to about 50 parts by weight, specifically, about 1 parts by weight or more, or about 5 parts by weight or more, or about 10 parts by weight or more, or about 15 parts by weight or more, or about 50 parts by weight or less, or about 45 parts by weight or less, or about 40 parts by weight or less, or about 35 parts by weight or less, or about 30 parts by weight or less, or about 25 parts by weight or less, based on 100 parts by weight of polybutylene adipate terephthalate.

The weight ratio of polybutylene adipate terephthalate: polylactic acid in the resin composition may be about 6.5:3.5 or more, or about 6.9:3.1 or more, or about 7.5:2.5 or more.

The weight ratio of polybutylene adipate terephthalate: polylactic acid in the resin composition may be about 9.5:0.5 or less, or about 9.1:0.9 or less.

If the content of polylactic acid is too small, the effect of improving the mechanical properties of PBAT may not appear, and if the content of polylactic acid is too large, there may be a problem that the hardness increases and the elongation of the resin composition decreases. In particular, when the resin composition is processed into a biodegradable film, or the like, there may be a problem that the processability and the like deteriorate, and the mechanical properties of the resin composition deteriorate.

The polyester-based resins have excellent mechanical and chemical properties and are used in various industrial fields. Among them, since polybutylene adipate terephthalate (PBAT) is a soft polyester that is biodegradable, it is attracting attention as a substitute for polyolefin-based polymers, which are mainly used in food packaging materials and agricultural films.

However, depending on the application, since the mechanical properties of polybutylene adipate terephthalate may be slightly insufficient to use soft polybutylene adipate terephthalate alone, it is mainly used by blending with a hard polylactic acid (PLA); or polybutylene adipate terephthalate is used alone, but is used by compounding with an organic filler such as carbon black.

However, since polybutylene adipate terephthalate and polylactic acid have very low compatibility, a compatibilizer must be used when blending the two to produce a blended resin.

Therefore, the resin composition according to one aspect of the present invention includes an acrylate-based copolymer in which monomers of specific components are copolymerized as a compatibilizer component.

The acrylate-based copolymer according to one embodiment of the present invention can increase the flexibility of the polymer chain due to its molecular structural characteristics, and can increase the compatibility between PBAT and PLA. When a film is produced using such a composition, chain diffusion and entanglement between film interfaces can be increased.

Thereby, the resin composition according to one aspect of the present invention has excellent processability, and can achieve very high mechanical properties while maintaining the inherent biodegradability of PBAT and PLA.

The resin composition may contain an acrylate-based copolymer in an amount of about 0.1 to about 10 parts by weight, specifically, about 0.1 parts by weight or more, or about 0.2 parts by weight or more, or about 0.3 parts by weight or more, or about 0.4 parts by weight or more, or about 10 parts by weight or less, or about 8 parts by weight or less, or about 7 parts by weight or less, or about 6 parts by weight or less, or about 5 parts by weight or less, based on 100 parts by weight of polybutylene adipate terephthalate,

In addition, the acrylate-based copolymer includes: i) a first repeating unit derived from an alkyl (meth)acrylate-based monomer, ii) a second repeating unit derived from an epoxy (meth)acrylate-based monomer, and iii) a third repeating unit derived from an alkylene glycol (meth)acrylate-based monomer.

The acrylate-based copolymer may be a resin-based copolymer formed by polymerizing monomers, or may be in the form of an emulsion in which latex particles are dispersed. Further, each monomer may exist in the copolymer in the form of a repeating unit derived from the monomer.

### Monomer

First, an alkyl (meth)acrylate-based monomer may be used for polymerization to produce the latex particles, and may be referred to as a first monomer. Therefore, the latex particles can include a repeating unit derived from an alkyl (meth)acrylate-based monomer, which may be referred to as a first repeating unit.

A copolymer containing the first repeating unit has excellent compatibility with polylactic acid. As an example, in a blended resin obtained by mixing polymethyl (meth)acrylate, which is a homopolymerization of methyl (meth)acrylate, with polylactic acid, the polyalkyl (meth)acrylate and polylactic acid have excellent miscibility with each other, to the extent that the measured glass transition temperature value appears almost a single value.

In addition, the copolymer containing the first repeating unit also exhibits excellent affinity with polybutylene adipate terephthalate relative to polylactic acid. Thereby, the copolymer containing the first repeating unit has excellent compatibility with polylactic acid and relatively excellent affinity with polybutylene adipate terephthalate, and thus, can be used as a compatibilizer.

According to one embodiment of the invention, the alkyl (meth)acrylate-based monomer may include at least one selected from the group consisting of methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, octyl (meth)acrylate, isooctyl (meth)acrylate, 2-ethylhexyl (meth)acrylate, decyl (meth)acrylate, isodecyl (meth)acrylate, isobornyl (meth)acrylate, and lauryl (meth)acrylate.

Moreover, an epoxy (meth)acrylate monomer can then be further used in the polymerization for producing the latex particles, which can be referred to as a second monomer. Thereby, the latex particles may include a repeating unit derived from an epoxy (meth)acrylate monomer, which may be referred to as a second repeating unit.

According to one embodiment of the invention, the epoxy (meth)acrylate-based monomer may be a compound represented by the following Chemical Formula 1. 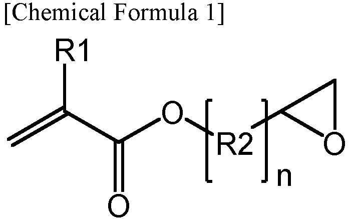 wherein, in Chemical Formula 1, R1 is hydrogen or methyl, R2 is a single bond, methylene, or an oxyalkylene having 1 to 3 carbon atoms, and n is 1 to 10.

In a copolymer containing a second repeating unit, the epoxy group may interact with the hydroxy group (-OH) or carboxyl group (-COOH) contained in polybutylene adipate terephthalate or polylactic acid.

Thus, the copolymer containing the second repeating unit can react with the terminal of polybutylene adipate terephthalate or polylactic acid to increase the molecular weight, and if this reaction occurs at the interface between polybutylene adipate terephthalate and polylactic acid, the compatibility and interfacial adhesive force between the two can be improved.

In addition, an alkylene glycol (meth)acrylate-based monomer may be further used in the polymerization for producing the latex particles, which may be referred to as a third monomer. Thereby, the latex particles may include a repeating unit derived from an alkylene glycol (meth)acrylate-based monomer, which may be referred to as a third repeating unit.

According to one embodiment of the invention, the alkylene glycol (meth)acrylate-based monomer may be a compound represented by the following Chemical Formula 2. 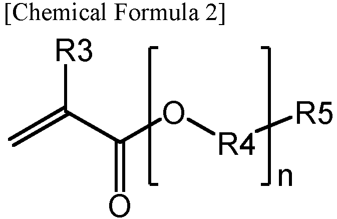 wherein, in Chemical Formula 2, R3 is hydrogen or methyl, R4 is an alkylene having 1 to 3 carbon atoms, R5 is hydrogen, an alkyl having 1 to 3 carbon atoms, or an oxyalkyl having 1 to 3 carbon atoms, and n is 1 to 10.

The third monomer may include an alkylene glycol repeating unit in the molecule, thereby imparting hydrophilicity to the copolymer, whereby the copolymer containing the third monomer may have excellent miscibility with polybutylene adipate terephthalate and polylactic acid.

The acrylate-based copolymer may include about 30 to about 60% by weight of a first repeating unit, about 30 to about 60% by weight of a second repeating unit, and about 5 to about 30% by weight of a third repeating unit, and may include about 40 to about 50 weight percent of a first repeat unit, about 35 to about 45 weight percent of a second repeat unit, and about 10 to about 20 weight percent of a third repeat unit.

If the amount is outside the above range or other monomers are used, the prepared copolymer has a reduced affinity and miscibility between polybutylene terephthalate adipate and polylactic acid, which may cause a problem that in a blended resin of polybutylene terephthalate adipate and polylactic acid, the interfacial adhesive force of each component decreases and the compatibility decreases.

The acrylate-based copolymer included in the composition according to an embodiment of the present invention may be prepared by a polymerization method such as radical polymerization, emulsion polymerization, or bulk polymerization.

As an example, the acrylate-based copolymer included in the composition according to an embodiment of the present invention may be prepared by emulsion polymerization which comprises a step of subjecting a monomer mixture including the above-mentioned first monomer, second monomer, and third monomer; and a polymerization initiator; and a composition for polymerization containing an emulsifier to an emulsion polymerization.

At this time, the polymerization temperature and polymerization time can be appropriately determined as the case may be. For example, the polymerization temperature may be from about 50°C to about 200°C, and the polymerization time may be from about 0.5 hours to about 20 hours.

As a polymerization initiator that can be used during the emulsion polymerization, inorganic or organic peroxides may be used. For example, a water-soluble polymerization initiator containing potassium persulfate, sodium persulfate, ammonium persulfate, and the like, and an oil-soluble polymerization initiator including cumene hydroperoxide, benzoyl peroxide, and the like may be used.

Further, an activator may be used together with the polymerization initiator to promote the initiation of the reaction of peroxide. As such an activator, at least one selected from the group consisting of sodium formaldehyde sulfoxylate, sodium ethylenediaminetetraacetate, ferrous sulfate, and dextrose may be used.

The polymerization initiator may be included in an amount of about 0.1 to about 10 parts by weight, preferably about 0.1 to about 5 parts by weight, based on 100 parts by weight of the monomer mixture on a dry weight basis..

Further, in order to improve the efficiency of the polymerization reaction, a chain transfer agent may be used together.

The chain transfer agent may serve to introduce homopolymers, which are polymers composed of only one type of monomer, into the micelle during the polymerization process.

As such a chain transfer agent, a linear or branched alkylthiol compound having 5 to 20 carbon atoms can be used. Specific examples of the alkylthiol compound include hexanethiol, cyclohexanethiol, adamantanethiol, heptanethiol, octanethiol, nonanethiol, decanethiol, undecanethiol, dodecanethiol, hexadecanethiol, octadecanethiol, and the like.

This chain transfer agent may be included in an amount of about 0.1 to about 10 parts by weight, preferably about 0.1 to about 5 parts by weight, based on 100 parts by weight of the monomer mixture on a dry weight basis.

Specifically, the emulsion polymerization can proceed through the following steps.
a first step of dispersing an emulsifier in a solvent to prepare an emulsion;
a second step of mixing a monomer mixture containing each monomer component, an emulsifier, and the like to prepare a pre-emulsion; and
a third step of mixing the emulsion of the first step and the pre-emulsion of the second step in the presence of a polymerization initiator to progress emulsion polymerization.

**In** a specific embodiment of the present invention, the above-mentioned acrylate-based copolymer can be specifically prepared by the following method, but is not necessarily limited thereto.

First, in the first step, an emulsion containing an emulsifier is prepared. This is separate from the pre-emulsion preparation process described below. As an emulsifier, an anionic emulsifier may be used alone, or an anionic emulsifier, a cationic emulsifier, and a nonionic emulsifier may be used together. Such emulsifier components and a solvent such as water can be mixed to prepare an emulsion.

**In** the process of preparing the emulsion, initial micelle particles with several nanometers in size can be stably formed.

Then, the second step is a process of preparing a pre-emulsion containing the above-mentioned monomer mixture, wherein each of the above-mentioned monomers, emulsifier, and the like are mixed with water to prepare a pre-emulsion.

At this time, similarly, as an emulsifier, an anionic emulsifier can be used alone, or an anionic emulsifier and the above-mentioned nonionic emulsifier can be used together. During this process, nano-sized latex particles may be formed within the pre-emulsion.

That is, the above-mentioned emulsifier can be used in any one or more of the emulsion preparation step and the pre-emulsion preparation step.

Next, in the third step, a polymerization initiator is added to the emulsion prepared above, and then the pre-emulsion and the polymerization initiator are continuously added in equal proportions for a predetermined period of time.

**In** a non-limiting embodiment of the present invention, the amount of the polymerization initiator added to the emulsion may be about 0 to about 1 part by weight based on 100 parts by weight of the monomer mixture, the amount of the polymerization initiator added with the pre-emulsion may be about 0.1 to about 2 parts by weight based on 100 parts by weight of the monomer mixture, and the continuous charging time may be about 3 hours to about 7 hours.

Through this process, the monomers or polymers floating within the pre-emulsion may flow into the initial particles produced in the emulsion.

The results of this reaction may then undergo a heating polymerization process in the presence of an additional polymerization initiator, through which polymerization of the remaining monomers is performed.

At this time, the polymerization initiator may be further added in an amount of about 0.1 to about 10 parts by weight based on 100 parts by weight of the monomer mixture, and the heating polymerization may proceed at a temperature of about 75 to about 85°C for about 40 minutes to about 80 minutes.

Such an emulsion polymerization method is divided into an emulsion preparation process and a pre-emulsion preparation process, and can then be carried out by a simple method of mixing the pre-emulsion with the emulsion, thereby improving process stability and productivity as compared to conventional methods.

### Emulsifier

In addition, the emulsifier used in the emulsion polymerization may include at least one selected from the group consisting of an anionic emulsifier, a cationic emulsifier, and a nonionic emulsifier.

Such an emulsifier is a material having both a hydrophilic group and a hydrophobic group, forms a micelle structure during the emulsion polymerization process, and causes polymerization of each monomer within the micelle structure.

The emulsifier commonly used in emulsion polymerization can be divided into an anionic emulsifier, a cationic emulsifier, a nonionic emulsifier, and the like, and from the viewpoint of polymerization stability in the emulsion polymerization, two or more types may be mixed and used.

Specifically, the nonionic emulsifier may include at least one selected from the group consisting of polyethylene oxide alkyl aryl ether, polyethylene oxide alkyl amine, and polyethylene oxide alkyl ester.

Further, the anionic emulsifier may include at least one selected from the group consisting of sodium alkyl diphenyl ether disulfonate, sodium polyoxyethylene alkyl ether sulfate, sodium polyoxyethylene aryl ether sulfate, sodium alkyl sulfate, sodium alkyl benzene sulfonate, and dialkyl sodium sulfosuccinate.

These can be used alone or in a mixture of two or more types, and it may be more effective to use a mixture of an anionic emulsifier and a non-ionic emulsifier, but the present invention is not necessarily limited to these types of emulsifiers.

Further, the emulsifier may be used, for example, in an amount of about 0.1 to about 10 parts by weight, or about 1 to about 5 parts by weight, based on a total of 100 parts by weight of monomer components used in the production of the latex particles.

If the amount of emulsifier used is too high, the particle size of latex particles becomes smaller, which may cause a problem that cohesive and adhesive force decreases, and if the amount of emulsifier is too small, there may be a problem that the stability of polymerization decreases in an emulsion polymerization reaction, and the stability of the resulting latex particles also decreases.

### Solvent

According to one embodiment of the invention, the polymerization composition may further include an aqueous solvent such as water in addition to the emulsifier and monomer components described above.

At this time, from the viewpoint of stability and viscosity adjustment of latex particles, the aqueous solvent may be used in an amount of about 10 to about 1,000 parts by weight based on 100 parts by weight of the latex particles, and for example, it can be used to adjust the total solid content (TSC) from about 10 to about 60% by weight, based on the total weight of the composition.

Further, the acrylate-based copolymer may have an epoxy equivalent weight of about 400 to about 600 g/eq, or about 400 g/eq or more, or about 450 g/eq or more, or about 500 g/eq or more, and about 600 g/eq or less, or about 550 g/eq or less, or about 520 g/eq or less.

If the epoxy equivalent value is too low, there may be a problem that the reactivity with the above-mentioned polybutylene adipate terephthalate or polylactic acid terminal is reduced, and the interfacial adhesive force decreases at the interface of each component of the blended resin. If the epoxy equivalent value is too high, the reactivity becomes too high, causing an excessive increase in viscosity of the blended resin, and the processability of the blended resin decreases.

The acrylate-based copolymer may have a weight average molecular weight of about 10,000 to about 50,000, or about 10,000 or more, or about 12,000 or more, or about 13,000 or more, and about 50,000 or less, or about 40,000 or less, or about 35,000 or less.

If the weight average molecular weight of the acrylate-based copolymer is too high or too low, there may be a problem that the compatibility between polybutylene adipate terephthalate and polylactic acid decreases, and the intrinsic physical properties of the blended resin deteriorate.

The acrylate-based copolymer may have a glass transition temperature value of about 60 to about 90°C, or about 60°C or more, or about 70°C or more, or about 80°C or more, and about 90°C or less, or about 85°C or less.

In addition, the acrylate-based copolymer has a molecular weight increase rate to polybutylene adipate terephthalate and polylactic acid of about 0% to about 30%, or greater than about 0%, or about 2% or more, or about 5% or more, or about 30% or less, or about 25% or less, or about 20% or less.

The acrylate-based copolymer not only serves as a compatibilizer that increases the compatibility between polybutylene adipate terephthalate and polylactic acid, but also serves as a molecular weight regulator that increases the molecular weight of the polymer resin.

Here, based on the weight average molecular weight values of the blended resin composition containing polybutylene adipate terephthalate and polylactic acid of the same type and same content, the molecular weight increase rate refers to the rate at which the weight average molecular weight value of the blended resin of polybutylene adipate terephthalate and polylactic acid, with the use of the acrylate-based copolymer or after the addition of the acrylate-based copolymer, increases, when compared with the weight average molecular weight value of the blended resin of polybutylene adipate terephthalate and polylactic acid, without the use of the acrylate-based copolymer or before the addition of the acrylate-based copolymer.

According to one embodiment of the invention, the resin composition may have a weight average molecular weight of 100,000 to 200,000, or about 100,000 or more, or about 110,000 or more, or about 120,000 or more, or about 130,000 or more, or about 140,000 or more, and about 200,000 or less, or about 190,000 or less, or about 180,000 or less, or about 170,000 or less, or about 160,000 or less.

In addition, the resin composition according to an embodiment of the invention may further include other additives. As the additives, common additives used in the molding of resin compositions in the technical field to which the present invention belongs, that is, in the field of thermoplastic polymers, can be used without particular limitation.

The additives may include a heat stabilizer, a UV stabilizer, and the like.

In addition, the additive may be included in an amount of about 1 to about 30 parts by weight based on a total of 100 parts by weight of the polybutylene adipate terephthalate and polylactic acid.

Further, the resin composition may contain an inorganic filler in an amount of about 1 to about 50 parts by weight, or about 10 to about 30 parts by weight, or about 15 to about 25 parts by weight, based on a total of 100 parts by weight of the polybutylene adipate terephthalate and polylactic acid.

The inorganic filler can improve the mechanical properties and processability of the resin composition. If the amount of the inorganic filler is too small, there may be a problem that the above-mentioned beneficial effects are not exhibited, and if the amount of the inorganic filler is too large, there may be a problem that the mechanical properties and processability of the resin composition are rather deteriorated.

Further, the resin composition may have a melt volume flow ratio (190°C, 5kg) of 2 to 10 ml/10min, or about 2 ml/10 min or more, and about 10 ml/10 min or less, or about 9 ml/10 min or less, or about 8ml/10min or less, or about 7ml/10min or less, which is measured according to the ASTM D1238 conditions.

The resin composition may have a tensile strength value of about 250 to about 390 kgf/cm², or about 250 kgf/cm² or more, or about 300 kgf/cm² or more, or about 320 kgf/cm² or more, and about 390 kgf/cm² or less, or about 370 kgf/cm² or less, or about 360 kgf/cm² or less, which is measured according to the ASTM D638 standard.

If the tensile strength value is too low, there may be problems that mechanical properties such as film strength deteriorate during film production, and if the tensile strength value is too high, stretching processing during film production may be difficult, which makes it difficult to use it as a mulch film, and the like.

Further, the resin composition has an elongation value of 400% or more, or about 450% or more, or about 500% or more, or about 550% or more, or about 600 % or more, and about 1000% or less, or about 900% or less, or about 800% or less, or about 700% or less, which is measured according to the ASTM D638 standard.

If the elongation value is too low, the stretching processing is difficult during film production, which makes it difficult to use it as a mulch film or the like.

Further, in the resin composition, the average domain diameter value of polylactic acid may be about 1 *µ*m or less, or about 800 nm or less, or about 500 nm or less.

Since polybutylene adipate terephthalate and polylactic acid do not mix completely with each other, they exist in a state where they are each divided within the blended resin, and generally, they exist in a dispersed form in which polylactic acid has independent, fixed regions, i.e., domains, within the polybutylene adipate terephthalate matrix.

Here, the domain diameter value refers to the diameter of a circular domain that appears when observing the surface or cross section of the resin composition with respect to the polylactic acid domain formed in a spherical shape within the polybutylene adipate terephthalate matrix. If the shape of the observed domain is not circular, it means the longest straight line, i.e., the longest diameter, among the straight lines passing through the center point of the domain.

Further, the average domain diameter means the number average value of the domain diameter values described above.

Such an average domain diameter value can be measured and confirmed by analyzing an image of the resin composition obtained through SEM or the like using an image analysis program or the like.

Specifically, the average domain diameter of the polylactic acid in the resin composition may be about 1 *µ*m or less, or about 800 nm or less, or about 500 nm or less.

In the resin composition according to an embodiment of the present invention, due to the high compatibility between polybutylene adipate terephthalate and polylactic acid, the domain size of polylactic acid dispersed in the polybutylene adipate terephthalate matrix is very small, so that polylactic acid can be uniformly dispersed in polybutylene adipate terephthalate.

According to a further embodiment, there is provided a biodegradable resin molded product containing the above-mentioned resin composition.

The biodegradable resin molded product according to one aspect of the present invention may be a biodegradable film.

The biodegradable resin molded product according to an embodiment of the present invention can be used for applications such as agricultural mulch films or food packaging materials due to such excellent mechanical properties.

### [Advantageous Effects]

The resin composition of the present invention can exhibit excellent mechanical properties while maintaining the inherent biodegradability of polybutylene adipate terephthalate and polylactic acid.

### [DETAILED DESCRIPTION OF THE EMBODIMENTS]

Hereinafter, actions and effects of the invention will be described in more detail with reference to specific examples of the invention. However, these examples are for illustrative purposes only, and the scope of the invention is not limited thereby in any way.

### Preparation of acrylate-based copolymer

Joncryl ADR-4368 (manufacturer: BASF) was used as the acrylate-based copolymer in Comparative Example 1.

### Example and Comparative Example

A 3 L glass reactor equipped with a thermometer, stirrer, dropping funnel, nitrogen gas inlet tube and reflux condenser was charged with 200 parts by weight of distilled water and 0.5 parts by weight of sodium dioctyl sulfosuccinate (sodium bis(2-ethylhexyl) sulfosuccinate) as an emulsifier component based on a total of 100 parts by weight of the monomer amounts listed below, and then the mixture was stirred. During stirring, the inside of the reactor was purged with nitrogen gas, the temperature of the glass reactor was raised to 70°C, 0.2 parts by weight of potassium persulfate was added thereto, and the temperature was maintained for 30 minutes.

Separately, monomers in the proportions listed in Table below were placed in a beaker and thoroughly mixed for 30 minutes. 1-Octanethiol as a chain transfer agent was added thereto in an amount of 0.5 parts by weight based on a total of 100 parts by weight of the monomers, and the mixture was thoroughly mixed with a stirrer, and then this mixture was continuously and evenly charged in the glass reactor for 6 hours.

Then, after 6 hours of polymerization reaction time had elapsed, the temperature inside the glass reactor was maintained at 70°C for 30 minutes, and then cooled to room temperature.

The resulting emulsion polymerization result was coagulated using an aqueous calcium acetate solution, subjected to a temperature-increase heat treatment up to about 85°C, dehydrated, and dried at about 60°C for about 16 hours to obtain an acrylate-based copolymer.

**[Table 1]**

| | Monomer composition (unit: part by weight) | | | |
|---|---|---|---|---|
| | MMA | GMA | BA | PEGMA |
| Comparative Example 1 | Joncryl ADR-4368 | | | |
| Comparative Example 2 | 55.0 | 30.0 | 15.0 | - |
| Comparative Example 3 | 45.0 | 40.0 | 15.0 | - |
| Comparative Example 4 | 30.0 | 55.0 | 15.0 | - |
| Example 1 | 56.9 | 26.7 | - | 16.5 |
| Example 2 | 56.7 | 26.6 | | 16.7 |

| | | | | |
|---|---|---|---|---|
| MMA: methyl methacrylate; GMA: glycidyl methacrylate; BA: butylacrylate; PEGMA: polyethylene glycol methacrylate (number of ethylene glycol repeat units: 6) | | | | |

### Measurement of molecular weight

The molecular weight of the acrylate-based copolymer sample obtained above was measured using gel permeation chromatography (GPC, PL GPC220, Agilent Technologies) under the following conditions. At this time, a portion of the sample was taken as a solution dissolved in the solvent tetrahydrofuran (Stabilized with BHT) at a concentration of 2 mg/ml, and the weight average molecular weight and number average molecular weight were measured.
- Column: PL MiniMixed B × 2
- Solvent: Tetrahydrofuran (Stabilized with BHT)
- Flow rate: 0.3 ml/min
- Sample concentration: 2.0 mg/ml
- Column temperature: 40°C
- Detector: Waters 2414 Refractive Index Detector
- Data processing: Empower
- Calibration curve: polystyrene standard product
(Molecular weight: 9 types of 2,000 / 10,000 / 30,000 / 70,000 / 200,000 / 700,000 / 2,000,000 / 4,000,000 / 10,000,000) used

### Measurement of epoxy equivalent weight

Using Bruker's 700 MHz NMR spectrometer, the content ratio (molar ratio) of glycidyl acrylate was measured according to the nuclear magnetic resonance spectroscopy, through which the equivalent number of epoxy groups (eq/mol) was determined, and the epoxy equivalent weight (eq/g) was calculated using the number average molecular weight (Mn) value measured above.

### Average particle diameter

The acrylate-based copolymers obtained above were each diluted with distilled water to a concentration of 200 ppm, and then the average particle diameter (D50) was measured using NICOMP 380 according to the dynamic light scattering (DLS) method of ISO 22412.

The measurement results are summarized in Table below.

**[Table 2]**

| | Tg (°C) | Mw (g/mol) | Epoxy equivalent (g/eq) |
|---|---|---|---|
| Comparative Example 1 | 54 | 6,800 | 285 |
| Comparative Example 2 | 68 | 33,000 | 471 |
| Comparative Example 3 | 65 | 33,000 | 355 |
| Comparative Example 4 | 57 | 33,000 | 258 |
| Example 1 | 83 | 32,000 | 504 |
| Example 2 | 83 | 17,000 | 504 |

Referring to Table 2, it can be confirmed that the copolymer according to Examples of the present invention has a relatively high epoxy equivalent value and a very high glass transition temperature value compared to Comparative Examples.

### Preparation of resin composition

As polybutylene adipate terephthalate, TH801T product from Xinjiang Blueridge Tunhe Chemical Industry was prepared.

As polylactic acid, Ingeo Biopolymer 2003D product from Natureworks was prepared.

The polybutylene adipate terephthalate and polylactic acid prepared above were dried in an oven at 60°C for about 24 hours.

80 parts by weight of polybutylene adipate terephthalate, 20 parts by weight of polylactic acid and 1 part by weight of the acrylate-based copolymer prepared above were mixed, which was then blended at 170°C at about 60 rpm using a Haake Rheomix OS Lab mixer from Thermo Electron Karlsruhe GmbH for about 10 minutes, and pulverized to obtain a resin composition.

### Measurement of elongation and tensile strength

The resin composition obtained above was placed in a 125*125*2mm mold, preheated at 180°C for about 5 minutes, then subjected to press processing for 3 minutes under a compressive load condition of 10MPa, and quenched at room temperature to prepare a specimen.

The specimen prepared above was prepared as a test specimen according to the ASTM D638, Type 4 standard.

The elongation and tensile strength of the test specimen prepared above were measured using an Instron universal physical property testing machine at 50 mm/min according to the ASTM D638 standard.

### Evaluation of processability

It was evaluated as O if gelation did not occur and phase separation of resin components did not occur during the processing process of the resin composition, and as X if gelation occurred or phase separation of resin components occurred.

### Measurement of molecular weight and molecular weight distribution

The composition obtained above was measured using gel permeation chromatography (GPC, PL GPC220, Agilent Technologies) under the following conditions. At this time, a portion of a solution dissolved in the solvent chloroform at a concentration of 1 mg/ml was taken as a sample, and the molecular weight was measured.
- Column: PL MiniMixed B x 2
- Solvent: Chloroform
- Flow rate: 1.0 ml/min
- Sample concentration: 1.0 mg/ml
- Column temperature: 40°C
- Detector: Waters 2414 Refractive Index Detector
- Data processing: Empower
- Calibration curve: polystyrene standard product
(Molecular weight: 9 types of 2,000 / 10,000 / 30,000 / 70,000 / 200,000 / 700,000 / 2,000,000 / 4,000,000 / 10,000,000) used

### Measurement of MFR value

The MFR value of the resin composition sample obtained above was measured according to the ASTM D1238 conditions (190°C, 5kg) using MI-4 from Gottfert.

The measurement results are summarized in Table below.

**[Table 3]**

| | Acrylate-based copolymer | Mw (10³g/mol ) | Molecula r weight increase rate (%) | Processabilit y | MFR (190°C, g/10min ) | Tensile strength (kgf/cm² ) | Elongatio n (%) |
|---|---|---|---|---|---|---|---|
| Example 1 | Example 1 | 151 | 112 | O | 6.7 | 330 | 650 |
| Example 2 | Example 2 | 160 | 119 | O | 4.8 | 355 | 640 |
| Comparativ e Example 1 | Comparativ e Example 1 | 175 | 130 | O | 0.0 | 393 | 590 |
| Comparativ e Example 2 | Comparativ e Example 2 | 145 | 107 | X | 7.6 | 360 | 670 |
| Comparativ e Example 3 | Comparativ e Example 3 | 150 | 111 | X | 6.9 | 392 | 670 |
| Comparativ e Example 4 | Comparativ e Example 4 | 159 | 118 | X | 5.0 | 400 | 665 |
| Comparativ e Example 5 | - | 135 | 100 | X | 14.3 | 230 | 670 |

It can be confirmed from the above table that in the case of Comparative Example 5 without using an acrylate-based copolymer, the molecular weight is low and the tensile strength value is very low.

In the case of Comparative Example 3 and Comparative Example 4, the effect of increasing the molecular weight appears to some extent, but problems such as gelation of the resin composition occurs during processing, which results in a decrease in processability. Moreover, in the case of Comparative Examples 3 and 4, the tensile strength value is too high, and so it is considered that processability would be reduced even when processing into a mulch film or the like.

In the case of Comparative Example 2, the molecular weight increase rate is about 107%, confirming that there is almost no molecular weight increase effect. There is a problem that during processing of the resin composition, gelation occurs in some parts, and in some cases, phase separation of the resin components occurs. In the case of Comparative Example 2, it is considered that there is a problem in making polybutylene adipate terephthalate and polylactic acid compatible.

In the case of Comparative Example 1 using Joncryl, the molecular weight increase rate is about 130%, which appears that the compatibilization between polybutylene adipate terephthalate and polylactic acid is well achieved, but it has an MFR of 0 and a very high viscosity even at high temperatures, which is expected to make processing such as molding the resin composition very difficult.

On the other hand, the resin composition according to Examples of the present invention appears to effectively increase the molecular weight of the resin composition while having a lower epoxy equivalent per molecule that that of Comparative Example 2, and the like. This appears to be because the PEGMA segment of the copolymer has high miscibility with polybutylene adipate terephthalate or polylactic acid.

As a result, the resin composition according to an embodiment of the present invention can achieve an appropriate molecular weight increase rate, viscosity, tensile strength, and elongation, and therefore, it is considered to have very high usability when used as a mulch film, and the like.

## Claims

1. A resin composition comprising:
a polybutylene adipate terephthalate;
a polylactic acid; and
an acrylate-based copolymer,
wherein the acrylate-based copolymer includes i) a first repeating unit derived from an alkyl (meth)acrylate-based monomer, ii) a second repeating unit derived from an epoxy (meth)acrylate-based monomer, and iii) a third repeating unit derived from an alkylene glycol (meth)acrylate-based monomer.

2. The resin composition as claimed in claim 1,
which comprises 1 to 50 parts by weight of polylactic acid based on 100 parts by weight of polybutylene adipate terephthalate.

3. The resin composition as claimed in claim 1,
which comprises 0.1 to 10 parts by weight of an acrylate-based copolymer based on 100 parts by weight of polybutylene adipate terephthalate.

4. The resin composition as claimed in claim 1, wherein:
the alkyl (meth)acrylate-based monomer comprises at least one selected from the group consisting of methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, octyl (meth)acrylate, isooctyl (meth)acrylate, 2-ethylhexyl (meth)acrylate, decyl (meth)acrylate, isodecyl (meth)acrylate, dodecyl (meth)acrylate, isobornyl (meth)acrylate, and lauryl (meth)acrylate.

5. The resin composition as claimed in claim 1, wherein:
the epoxy (meth)acrylate-based monomer is a compound represented by the following Chemical Formula 1: 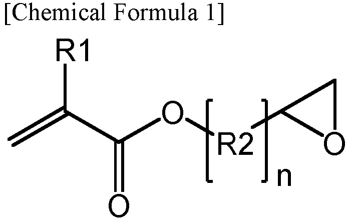
wherein, in Chemical Formula 1,
R1 is hydrogen or methyl,
R2 is a single bond, methylene, or an oxyalkylene having 1 to 3 carbon atoms, and
n is 1 to 10.

6. The resin composition as claimed in claim 1, wherein:
the alkylene glycol (meth)acrylate-based monomer is a compound represented by the following Chemical Formula 2: 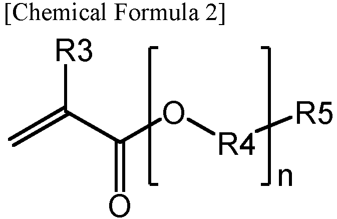
wherein, in Chemical Formula 2,
R3 is hydrogen or methyl,
R4 is an alkylene having 1 to 3 carbon atoms,
R5 is hydrogen, an alkyl having 1 to 3 carbon atoms, or an oxyalkyl having 1 to 3 carbon atoms, and
n is 1 to 10.

7. The resin composition as claimed in claim 1, wherein:
the acrylate-based copolymer has an epoxy equivalent of 400 to 600 g/eq.

8. The resin composition as claimed in claim 1, wherein:
the acrylate-based copolymer has a weight average molecular weight of 10,000 to 50,000.

9. The resin composition as claimed in claim 1, wherein:
the acrylate-based copolymer has a glass transition temperature value of 60 to 90°C.

10. The resin composition as claimed in claim 1, wherein:
the resin composition has a weight average molecular weight of 100,000 to 200,000.

11. The resin composition as claimed in claim 1, wherein:
the value of melt volume flow ratio (190°C, 5kg) measured according to ASTM D1238 conditions is 2 to 10 ml/10min.

12. The resin composition as claimed in claim 1, wherein:
the tensile strength value measured according to the ASTM D638 standard is 250 to 390 kgf/cm².

13. The resin composition as claimed in claim 1, wherein:
the elongation value measured according to the ASTM D638 standard is 400% or more.

14. The resin composition as claimed in claim 1, wherein:
the average domain diameter value of polylactic acid is 1 *µ*m or less.

15. A biodegradable resin molded product comprising the resin composition as claimed in any one of claims 1 to 14.
